# EUROPÄISCHE PATENTSCHRIFT

(11) **EP 2 853 770 B1**
(45) Veröffentlichungstag und Bekanntmachung des Hinweises auf die Patenterteilung: **10.01.2018**
(21) Anmeldenummer: 14181709.8
(22) Anmeldetag: 21.08.2014
(51) Int. Cl.: F16F 15/14

(54) **Tilgersystem**
Damping system
Système d'absorption

(30) Priorität: 27.09.2013 DE 102013219505
(43) Veröffentlichungstag der Anmeldung: 01.04.2015
(73) Patentinhaber: ZF Friedrichshafen AG, 88046 Friedrichshafen (DE)
(72) Erfinder: Siemens, Kyrill, 97084 Würzburg (DE); Wirachowski, Michael, 97078 Würzburg (DE); Hertel, Martin, 97493 Bergrheinfeld (DE)

(56) Entgegenhaltungen:
- WO-A1-2012/168604
- DE-A1-102011 010 342
- DE-A1-102012 204 186
- DE-A1-102012 212 964

## Beschreibung

Die vorliegende Erfindung betrifft ein Tilgersystem, das einen Tilgermassenträger mit einer Mehrzahl axial benachbart zueinander angeordneter Tilgermassen-Trägerelementen, die zur Aufnahme von ebenfalls benachbart zueinander angeordneten Tilgermasseneinheiten vorgesehen sind, aufweist.

Ein derartiges Tilgersystem ist aus der DE 10 2011 010 342 A1 und der WO 2012/168604 A1 bekannt. Das Tilgersystem der DE 10 2011 010 342 A1 verfügt gemäß Fig. 5 über einen Tilgermassenträger mit zwei mit Axialabstand zueinander angeordneten Tilgermassen-Trägerelementen, von denen jeder zur beidseitigen Aufnahme relativ bewegbarer Tilgermassen dient. Hierfür verfügen sowohl die Tilgermassen-Trägerelemente als auch die Tilgermassen jeweils über Führungsbahnen, in welchen Verbindungselemente bewegbar aufgenommen sind. Die beiden Tilgermassen-Trägerelemente sind mittels Distanzhaltern fest miteinander verbunden, und zusätzlich über das zu einer Dämpfungseinrichtung benachbarte Tilgermassen-Trägerelement an einen Torsionsdämpferausgang der Dämpfungseinrichtung angebunden. Das Tilgersystem ist ebenso wie die Dämpfungseinrichtung Teil einer hydrodynamisch wirksamen Kopplungseinrichtung, wobei eine Überbrückungskupplung dieser Kopplungseinrichtung mit einem Torsionsdämpfereingang der Dämpfungseinrichtung und ein Turbinenrad des hydrodynamischen Kreises dieser Kopplungseinrichtung mit dem Tilgersystem und daher auch mit dem Torsionsdämpferausgang der Dämpfungseinrichtung fest verbunden ist.

Durch Aufnahme relativ zu einem Tilgermassen-Trägerelement bewegbarer Tilgermassen beidseits des jeweiligen Tilgermassen-Trägerelementes kann insbesondere dann, wenn ein Tilgermassenträger eine Mehrzahl von Tilgermassen-Trägerelementen aufweisen soll, die gewünschte Funktion mit einem Minimum an Tilgermassenträgern erzielt werden. Nachteilig wirkt sich allerdings aus, dass sowohl an den Verbindungsstellen zwischen den Tilgermassen-Trägerelementen und den dieselben mit den Tilgermassen jeweils koppelnden Verbindungselementen als auch an den Verbindungsstellen zwischen den Tilgermassen und den Verbindungselementen jeweils eine hohe Hertz'sche Pressung besteht. Diese Pressung kann sich nochmals steigern, wenn es bei geringem Querschnitt des jeweiligen Tilgermassen-Trägerelementes aufgrund sehr kurzer Führungslänge zu einem Verkippen der Verbindungselemente kommt, wodurch zusätzliche Kantenpressungen entstehen.

Weitere Tilgersysteme sind aus der DE 10 2012 212 964 A1 und der DE 10 2012 204 186 A1 bekannt geworden.

Ein Tilgersystem, welches die Problematik der Hertz'schen Pressung, insbesondere aber die Problematik von Kantenpressungen infolge kurzer Führungslänge am Tilgermassen-Trägerelement vermeidet, ist durch die DE 10 2011 076 790 A1, insbesondere Fig. 7, bekannt. Dort ist an einem Torsionsdämpfer-Zwischenbauteil einer Dämpfungseinrichtung ein Tilgersystem befestigt, das über einen Tilgermassenträger mit Tilgermassen-Trägerelementen verfügt, die mit Axialabstand zueinander angeordnet sind, und axial zwischen sich zur Aufnahme von Tilgermassen vorgesehen sind. Nachteilig bei einer derartigen Ausführung des Tilgersystems ist allerdings, dass bei Bedarf einer Mehrzahl von Tilgermassenträgern die Anzahl an Tilgermassen-Trägerelementen hoch liegt, was bei axialer Aneinanderreihung der Tilgermassenträger zu einem großen axialen Bauraumbedarf entsteht.

Der Erfindung liegt die Aufgabe zugrunde, ein Tilgersystem mit einem eine Mehrzahl axial benachbart zueinander angeordneter Tilgermassen-Trägerelemente aufweisenden Tilgermassenträger derart auszubilden, dass bei geringer Anzahl an Tilgermassen-Trägerelementen die Hertz'sche Pressung zwischen Verbindungselementen und Tilgermassen-Trägerelementen einerseits und zwischen Verbindungselementen und Tilgermassen andererseits innerhalb eines problemfreien Belastungsbereichs verbleibt, und Kantenpressungen an den Verbindungselementen weitgehend ausgeschlossen sind.

Gemäß der vorliegenden Erfindung wird diese Aufgabe gelöst durch ein Tilgersystem, aufweisend einen Tilgermassenträger mit einer Mehrzahl axial benachbart zueinander angeordneter Tilgermassen-Trägerelementen, die zur Aufnahme von ebenfalls benachbart zueinander angeordneten Tilgermasseneinheiten vorgesehen sind, wobei wenigstens eines der Tilgermassen-Trägerelemente zur Aufnahme wenigstens zweier axial benachbart zueinander angeordneter Tilgermasseneinheiten vorgesehen ist.

Dieses Tilgersystem bietet den Vorteil, dass je eine Tilgermasseneinheit axial zwischen jeweils zwei mit Axialabstand zueinander angeordneten Tilgermassen-Trägerelementen aufgenommen ist, und somit die Hertz'sche Pressung zwischen als Verbindungselemente wirksamen Rollkörpern und Tilgermassen-Trägerelementen einerseits und zwischen als Verbindungselemente wirksamen Rollkörpern und Tilgermassen andererseits innerhalb eines problemfreien Belastungsbereichs verbleibt, und Kantenpressungen an den Verbindungselementen weitgehend ausgeschlossen sind. Trotzdem ist die Anzahl der Tilgermassen-Trägerelementen bei diesem Tilgersystem begrenzt, da zumindest ein axial zwischen zwei zueinander benachbarten Tilgermasseneinheiten angeordnetes Tilgermassen-Trägerelement zur Aufnahme beider Tilgermasseneinheiten vorgesehen ist, wobei jede Tilgermasseneinheit eine oder mehrere Tilgermassen aufweisen kann. Bei einem Tilgersystem mit zwei axial benachbart zueinander angeordneten Tilgermasseneinheiten bedeutet dies, dass drei Tilgermassen-Trägerelemente vorgesehen sind, davon zwei axial äußere Tilgermassen-Trägerelemente, von denen jedes Führungsbahnen für jeweils eine der axial benachbart zueinander angeordneten Tilgermasseneinheiten aufweist, und ein axial mittiges Tilgermassen-Trägerelement, an welchem beidseits je eine der beiden axial benachbart zueinander angeordneten Tilgermasseneinheiten an Führungsbahnen aufgenommen ist. Aufgrund dieser Lösung ist jede der axial benachbart zueinander angeordneten Tilgermasseneinheiten jeweils axial beidseitig durch je ein Tilgermassen-Trägerelement geführt, und dennoch kann, bezogen auf dieses Tilgersystem, auf zumindest ein Tilgermassen-Trägerelement verzichtet werden, da wenigstens ein axial mittiges Tilgermassen-Trägerelement Führungsbahnen für beide axial benachbart zueinander angeordnete Tilgermassen aufweist. Selbstverständlich wird diese Einsparung an Tilgermassen-Trägerelementen umso größer, je mehr Tilgermasseneinheiten axial benachbart zueinander angeordnet werden sollen.

Bei Ausbildung von Tilgermassen-Trägerelementen zur Aufnahme zweier axial benachbart zueinander angeordneten Tilgermasseneiheiten benötigen diese axial mittigen Tilgermassen-Trägerelemente gegenüber den axial äußeren Tilgermassen-Trägerelementen, also gegenüber denjenigen Tilgermassen-Trägerelementen, welche lediglich jeweils nur zumindest eine Tilgermasseneinheit aufnehmen, jeweils die doppelte Anzahl an Führungsbahnen, nämlich zum einen die Führungsbahnen für die zumindest eine Tilgermasseneinheit an einer Seite und zum anderen die Führungsbahnen für die zumindest eine Tilgermasseneinheit an der Gegenseite des jeweiligen Tilgermassen-Trägerelementes. Diese Führungsbahnen können gemäß einer Ausführung des Tilgersystems zumindest im Wesentlichen auf gleichen Radien um eine Zentralachse des Tilgersystems ausgebildet sein, und sind deshalb mit Umfangsversatz zueinander angeordnet. Hierdurch entsteht ein sehr kompakt ausgebildetes Tilgersystem. Sollte die aufgrund der vielen Führungsbahnen entstehende Schwächung des jeweiligen Tilgermassen-Trägerelementes nicht akzeptiert werden können, besteht gemäß einer alternativen Ausführung des Tilgersystems die Möglichkeit, die axial benachbart zueinander angeordneten Tilgermasseneinheiten auf deutlich unterschiedlichen Radien um die Zentralachse des Tilgersystems anzuordnen. Verständlicherweise sind bei dieser Ausführung die Führungsbahnen für die jeweils zwei axial benachbart zueinander angeordneten Tilgermasseneinheiten mit Radialversatz zueinander angeordnet.

Die axial benachbart zueinander angeordneten Tilgermasseneinheiten können zur Tilgung von Anregungen eines Antriebs, wie einer Brennkraftmaschine, mit zumindest im Wesentlichen gleichen Ordnungen oder aber zur Tilgung von Anregungen mit unterschiedlichen Ordnungen vorgesehen sein. Sind diese Tilgermasseneinheiten zur Tilgung von Anregungen mit im Wesentlichen gleichen Ordnungen vorgesehen, dann sind die in den axial äußeren Tilgermassen-Trägerelementen sowie die in dem oder den axial mittleren Tilgermassen-Trägerelementen vorgesehenen Führungsbahnen zumindest im Wesentlichen gleich ausgebildet. Sollen dagegen die axial benachbart zueinander angeordneten Tilgermasseneinheiten zur Tilgung von Anregungen mit unterschiedlichen Ordnungen vorgesehen sein, dann sind die in den axial äußeren Tilgermassen-Trägerelementen sowie die in dem oder den axial mittleren Tilgermassen-Trägerelementen vorgesehenen Führungsbahnen unterschiedlich ausgebildet, sofern für die unterschiedlichen Führungsbahnen aus Kostengründen jeweils gleiche Rollkörper Verwendung finden. Im Fall der Tilgung von Anregungen mit unterschiedlichen Ordnungen ist beispielsweise eine der beteiligten Tilgermasseneinheiten für Anregungen der 2. Ordnung vorgesehen, eine andere der beteiligten Tilgermasseneinheiten dagegen für Anregungen der 1. Ordnung. Dies ist dann vorteilhaft, wenn die dem Tilgersystem vorgeschaltete Brennkraftmaschine als 4-Zylinder-Maschine ausgebildet ist, bei welcher eine Zylinderabschaltung zu einem Betrieb mit lediglich noch 2 Zylindern führt. Im 4-Zylinderbetrieb ist die Tilgung von Anregungen der 2. Ordnung vorzunehmen, im 2-Zylinderbetrieb dagegen die Tilgung von Anregungen der 1. Ordnung. Vergleichbar verhält es sich bei Zylinderabschaltungen von 6-Zylindermaschinen auf 3 Zylinder, bei Zylinderabschaltungen von 8-Zylindermaschinen auf 4 Zylinder oder bei Zylinderabschaltungen von 12-Zylindermaschinen auf 6 Zylinder. Im erstgenannten Fall werden alternativ zu Anregungen der 3. Ordnung die Anregungen der 1,5. Ordnung getilgt, im mittleren Fall alternativ zu Anregungen der 4. Ordnung die Anregungen der 2. Ordnung und im letztgenannten Fall alternativ zur 6. Ordnung die 3. Ordnung.

Die Erfindung wird nachfolgend anhand der beiliegenden Figuren detailliert beschrieben. Es zeigt:
Fig. 1 eine Draufsicht auf ein Tilgersystem mit Tilgermassen, die in einer Position dargestellt sind, die sie bei die Gewichtskraft übersteigender Fliehkraft und frei von eingeleiteten Torsionsschwingungen einnehmen;
Fig. 2 wie Fig. 1, aber mit den Tilgermassen in einer Position, die bei unter die Gewichtskraft abgesunkener Fliehkraft eingenommen wird;
Fig. 3 eine Draufsicht auf das Tilgersystem wie bei Fig. 1, aber mit zeichnerischer Darstellung eines axial äußeren Tilgermassen-Trägerelementes eines Tilgermassenträgers;
Fig. 4 eine Darstellung gemäß der Seitenansicht des in Fig. 3 dargestellten Tilgermassenträgers mit zwei axial äußeren Tilgermassen-Trägerelementen und einem axial mittigen Tilgermassen-Trägerelement;
Fig. 5 eine Herauszeichnung des axial mittigen Tilgermassen-Trägerelementes aus Fig. 4;
Fig. 6 eine Verbindung des Tilgersystems über eine Dämpfungseinrichtung mit einer Überbrückungskupplung einer als hydrodynamischer Drehmomentwandler ausgebildeten Kopplungsanordnung, und mit einem hydrodynamischen Kreis der Kopplungsanordnung;
Fig. 7 ein Tilgermassenträger wie in Fig. 4, mit unterschiedlichen konstruktiven Ausgestaltungen zur Herstellung der Verbindung mit der Dämpfungseinrichtung.

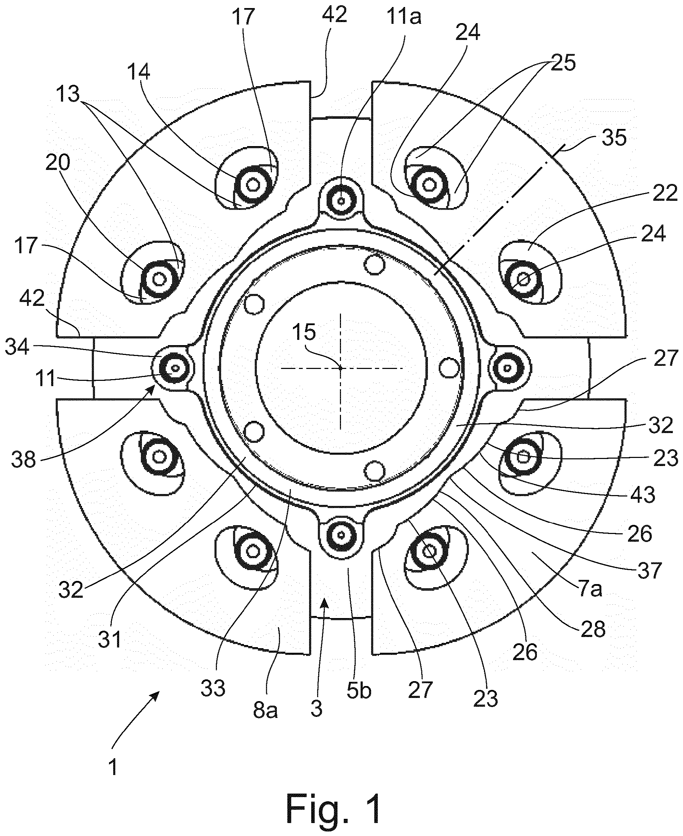

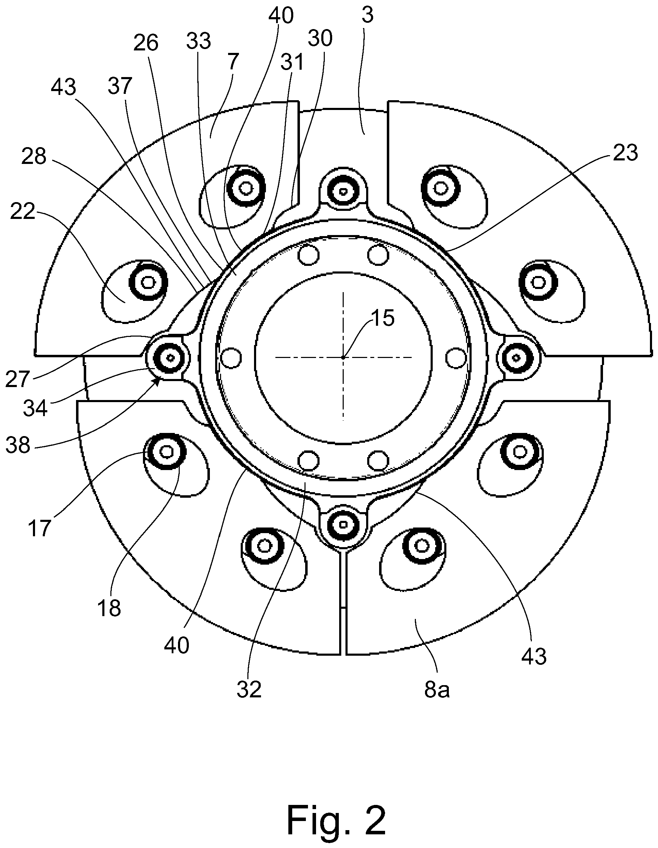

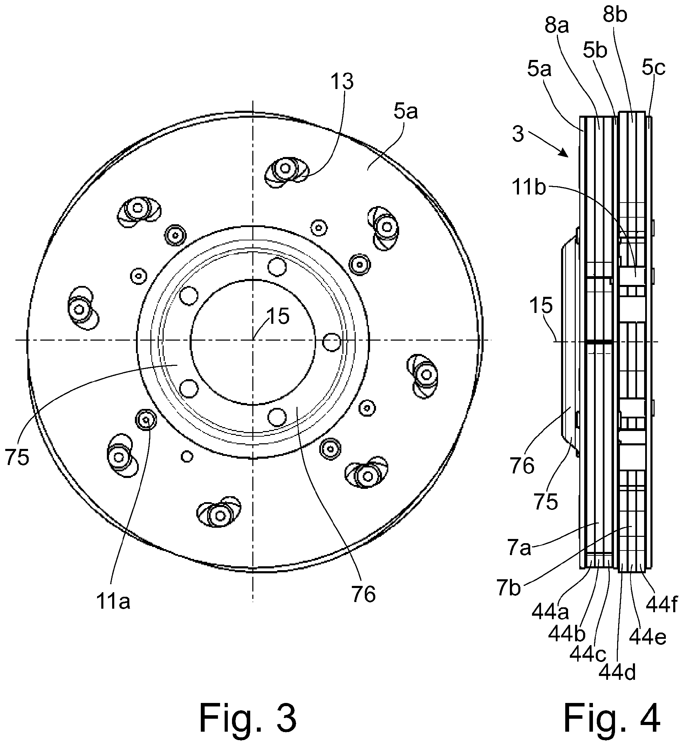

In Fig. 1 ist ein Tilgersystem 1 mit einem Tilgermassenträger 3 dargestellt, der, wie in Fig. 4 veranschaulicht, eine Mehrzahl von mit Axialabstand zueinander angeordnete Tilgermassen-Trägerelemente 5a bis 5c aufweist. In Fig. 1 und 2 ist das Wirkprinzip des Tilgersystems 1 anhand von Tilgermasseneinheiten 8a mit jeweils zumindest einer Tilgermasse 7a dargestellt, wobei diese Tilgermasseneinheiten 8a sich, wie Fig. 4 weiterhin zeigt, axial zwischen den beiden Tilgermassen-Trägerelementen 5a und 5b befinden. Es sei allerdings bereits jetzt darauf hingewiesen, dass das gleiche Wirkprinzip auch für die Tilgermasseneinheiten 8b mit zumindest einer Tilgermasse 7b zutrifft, die in Fig. 4 axial zwischen den beiden Tilgermassen-Trägerelementen 5b und 5c vorgesehen sind. Obwohl somit lediglich eine Beschreibung zu den Tilgermassen 7a der Tilgermasseneinheiten 8a folgt, gelten die Ausführungen selbstverständlich auch für die Tilgermassen 7b der Tilgermasseneinheiten 8b. Entsprechendes gilt auch für Abstandsstücke 11b, die in Fig. 4 axial zwischen den beiden Tilgermassen-Trägerelementen 5b und 5c vorgesehen sind, und die funktional den in Fig. 1 und 2 behandelten Abstandsstücken 11a entsprechen, die axial zwischen den beiden Tilgermassen-Trägerelementen 5a und 5b vorgesehen sein sollen. Insofern dienen die Abstandsstücke 11b ebenso wie die Abstandsstücke 11a, wie nachfolgend noch ausführlich erläutert wird, jeweils zur Aufnahme eines ringförmigen Bauteils 32. Es bleibt nachzutragen, dass, wie Fig. 4 ferner vermittelt, die Tilgermassen 7a in Achsrichtung eine Mehrzahl von Tilgermassenelementen 44a bis 44c aufweisen, und die Tilgermassen 7b in Achsrichtung eine Mehrzahl von Tilgermassenelementen 44d bis 44f.

Zur besseren Darstellbarkeit der am Tilgermassenträger 3 aufgenommenen Tilgermassen 7a ist in den Fig. 1 und 2 jeweils das in Blickrichtung axial vor den Tilgermassen 7a angeordnete Tilgermassen-Trägerelement 5a entfernt, und lediglich das axial mittlere Tilgermassen-Trägerelement 5b abgebildet. Wie bereits erwähnt, ist das Tilgermassen-Trägerelement 5b durch Abstandsstücke 11a mit dem Tilgermassen-Trägerelement 5a und durch Abstandsstücke 11b mit dem Tilgermassen-Trägerelement 5c verbunden. Die in Fig. 1 und 2 gezeigten Tilgermassen 7a verfügen über jeweils paarweise ausgebildete Führungsbahnen 22 zur Aufnahme von Rollkörpern 20, wobei die Führungsbahnen 22 derart ausgelegt sind, dass sie eine radiale Relativbewegung der Tilgermassen 7a gegenüber den Rollkörpern 20 ermöglichen. Die Tilgermassen 7a weisen, radial innen an ihre Umfangsseiten 42 angrenzend, Anschlagseiten 43 auf.

An den Tilgermassen-Trägerelementen 5a bis 5c sind, ebenfalls jeweils paarweise, Führungsbahnen 13 vorgesehen, die über einen gekrümmten Verlauf verfügen. Gemäß Darstellung in Fig. 1 oder 2 verfügen die Führungsbahnen 13 über je einen Ausgangsbereich 14, in welchem die jeweilige Führungsbahn 13 den größten Radialabstand von einer Zentralachse 15 aufweist, und über Anschlussbereiche 17, die sich, einander umfangsmäßig entgegengesetzt erstreckend, an beide Seiten des Ausgangsbereiches 14 anschließen. Auch die an den Tilgermassen 7a, 7b vorgesehenen Führungsbahnen 22 verfügen über einen gekrümmten Verlauf, mit je einem Ausgangsbereich 24, in welchem die jeweilige Führungsbahn 22 den geringsten Radialabstand von der Zentralachse 15 aufweist, und mit Anschlussbereichen 25, die sich, einander umfangsmäßig entgegengesetzt erstreckend, an beide Seiten des Ausgangsbereiches 24 anschließen. Die Führungsbahnen 22 sind jeweils beidseits eines Tilgermassenzentrums 35 der jeweiligen Tilgermasse vorgesehen.

Die in den Führungsbahnen 13 und 22 aufgenommenen Rollkörper 20 greifen jeweils beidseits der jeweiligen Führungsbahn 22 in die dort vorgesehenen Führungsbahnen13 ein. In der Darstellung gemäß Fig. 1 streben die Tilgermassen 7a, bedingt durch die Fliehkraft, nach radial außen, so dass sich die Rollkörper 20 jeweils im Ausgangsbereich 24 der jeweiligen Führungsbahn 22 positionieren, also in demjenigen Bereich, der über den geringsten Radialabstand zur Zentralachse 15 verfügt. Die Rollkörper 20 stützen sich hierbei jeweils im Ausgangsbereich 14 der Tilgermassen-Trägerelemente 5a und 5b sowie 5b und 5c ab, also in demjenigen Bereich, der über den größten Radialabstand zur Zentralachse 15 verfügt.

Die Tilgermassen 7a weisen jeweils an ihren radial inneren Enden jeweils eine geometrische Anformung 28 auf, die im umfangsseitig mittleren Teil über einen ersten Kontaktbereich 26 verfügt, in den umfangsseitig äußeren Teilen dagegen über zweite Kontaktbereiche 27. Der erste Kontaktbereich 26 verfügt über eine Bereichsmitte 37, welche den ersten Kontaktbereich 29 in Anformunghälften 23 unterteilt. Diese geometrische Anformung 28 wirkt in nachfolgend noch zu beschreibender Weise mit radial innerhalb der Tilgermassen 7a vorgesehenen Anschlägen 31 zusammen, die an einem ringförmigen Bauteil 32 zusammen gefasst sind.

Das ringförmige Bauteil 32 verfügt in Umfangsrichtung zwischen je zwei Tilgermassen 7a über je eine Halterung 34, die jeweils ein Abstandsstück 11a umschließt, so dass die Halterung 34 jeweils als Anschlagaufnehmer 38 dient. Das ringförmige Bauteil 32 ist demnach drehfest an dem Tilgermassen-Trägerelement 5b und damit am Tilgermassenträger 3 aufgenommen. Ein sich in Umfangsrichtung erstreckender Ringkörper 33 wirkt zwischen je zwei Anschlagaufnehmern 38 jeweils mit einem Anschlagprofil 40. Anschlagaufnehmer 38 und Anschlagprofile 40 bilden gemeinsam Anschläge 31 an dem ringförmigen Bauteil 32.

Wenn das Tilgersystem 1 mit einer Drehzahl betrieben wird, bei welcher die Fliehkraft die Gewichtskraft übersteigt, streben die Tilgermassen 7a unter der Wirkung der Fliehkraft nach radial außen, so dass sich die Rollkörper 20 jeweils im Ausgangsbereich 24 der jeweiligen Führungsbahn 22 der Tilgermassen 7a positionieren können. Torsionsschwingungen können zwar Auslenkungen der Tilgermassen 7a in Umfangsrichtung erzwingen, wodurch die Rollkörper 20 aus den Ausgangsbereichen 14, 24 der Führungsbahnen 13, 22 in deren Anschlussbereiche 17, 25 ausgelenkt werden, jedoch erfolgt bei abklingender Torsionsschwingung stets eine Rückstellung der Rollkörper 20 in die Ausgangsposition unter der Wirkung der Fliehkraft.

Fällt die Fliehkraft dagegen unter die Gewichtskraft, beispielsweise bei einem Kriechbetrieb eines Kraftfahrzeuges oder beim Abstellen eines Antriebs, wie beispielsweise einer Brennkraftmaschine, dann fallen die Tilgermassen 7a nach radial innen, um die in Fig. 2 gezeigte Relativposition zueinander und zum Tilgermassenträger 3 einzunehmen. Bei einem solchen Betriebszustand fallen die beiden sich radial oberhalb der Zentralachse 15 befindlichen Tilgermassen 7a nach radial innen, bis ihre Anschlagseiten 43 mit der für die Bewegungsrichtung relevanten Anformungshälfte 23 des ersten Kontaktbereichs 26 in Anlage an dem zugeordneten Anschlagprofil 40 des Anschlags 31 am Ringkörper 33 des ringförmigen Bauteils 32 gekommen sind. Sollten die Führungsbahnen 13, 22 eine weitere Bewegung der Tilgermassen 7 nach radial unten zulassen, wird diese Bewegung erst dann enden, wenn der für die Bewegungsrichtung relevante zweite Umfangsbereich 27 der jeweiligen Tilgermasse 7a an der Halterung 34 und damit am Anschlagaufnehmer 38 des ringförmigen Bauteils 32 in Anlage gelangt ist. Die beiden sich radial unterhalb der Zentralachse 15 befindlichen Tilgermassen 7a fallen ebenfalls nach radial innen, bis ihre Anschlagseiten 43 mit den daran angeformten, für die Bewegungsrichtung relevanten ersten Kontaktbereichen 26 in Anlage an dem zugeordneten Anschlagprofil 40 des Anschlags 31 am Ringkörper 33 des ringförmigen Bauteils 32 gekommen sind, und bis zudem die für die Bewegungsrichtung relevanten zweiten Kontaktbereiche 27 der jeweiligen Tilgermassen 7a an den entsprechenden Halterungen 34 und damit an den Anschlagaufnehmern 38 des ringförmigen Bauteils 32 in Anlage gelangt sind. Auf diese Weise wird verhindert, dass die beiden sich radial unterhalb der Zentralachse 15 befindlichen Tilgermassen 7a mit ihren Umfangsseiten 42 in Anlage aneinander gelangen.

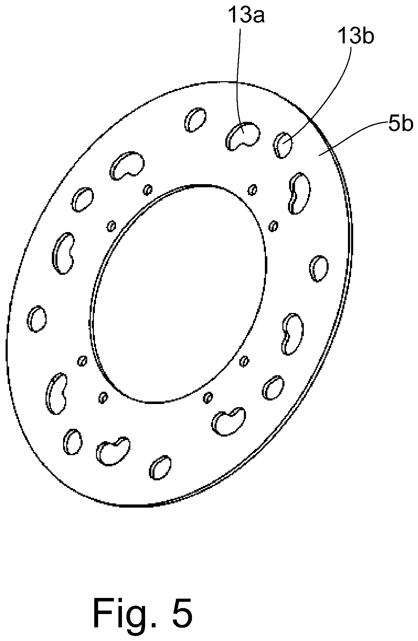

Wie Fig. 4 im Einzelnen zeigt, ist für die Tilgermassen 7a vorgesehen, diese axial zwischen zwei Tilgermassen-Trägerelementen 5a und 5b aufzunehmen, und für die Tilgermassen 7b, diese axial zwischen zwei Tilgermassen-Trägerelementen 5b und 5c aufzunehmen. Da somit das axial mittlere Tilgermassen-Trägerelement 5b sowohl zur Aufnahme der Tilgermassen 7a als auch zur Aufnahme der Tilgermassen 7b Verwendung findet, benötigt dieses Tilgermassen-Trägerelement 5b gegenüber den beiden axial äußeren Tilgermassen-Trägerelementen 5a und 5c eine höhere Anzahl an Führungsbahnen 13, nämlich zum einen die Führungsbahnen 13a für die Tilgermassen 7a und zum anderen die Führungsbahnen 13b für die Tilgermassen 7b. Dieser Unterschied des axial mittleren Tilgermassen-Trägerelementes 5b gegenüber den axial äußeren Tilgermassen-Trägerelementen 5a und 5c ist bei Vergleich der Fig. 3 und 5 zu erkennen, wobei Fig. 3 beispielhaft für die axial äußeren Tilgermassen-Trägerelemente 5a und 5c das Tilgermassen-Trägerelement 5a abbildet. Im axial mittleren Tilgermassen-Trägerelement 5b sind die Führungsbahnen 13a und 13b dann zumindest im Wesentlichen gleich ausgebildet, wenn durch beide Tilgermassen 7a und 7b Anregungen eines Antriebs, wie beispielsweise einer Brennkraftmaschine, mit zumindest im Wesentlichen der gleichen Ordnung zu tilgen sind. Sollen dagegen Anregungen mit unterschiedlichen Ordnungen getilgt werden, dann unterscheiden sich die Führungsbahnen 13a und 13b voneinander, wie dies in Fig. 5 dargestellt ist, sofern für beide Führungsbahnen 13a und 13b aus Kostengründen jeweils gleiche Rollkörper Verwendung finden sollen. Bei der Darstellung in Fig. 5 sind die Führungsbahnen 13a beispielsweise zur Tilgung von Anregungen der 2. Ordnung vorgesehen, und die Führungsbahnen 13b zur Tilgung von Anregungen der 1. Ordnung. Dies ist dann vorteilhaft, wenn die dem Tilgersystem 1 vorgeschaltete Brennkraftmaschine als 4-Zylinder-Maschine ausgebildet ist, bei welcher eine Zylinderabschaltung zu einem Betrieb mit lediglich noch 2 Zylindern führt. Im 4-Zylinderbetrieb ist die Tilgung von Anregungen der 2. Ordnung vorzunehmen, im 2-Zylinderbetrieb dagegen die Tilgung von Anregungen der 1. Ordnung. Vergleichbar verhält es sich bei Zylinderabschaltungen von 6-Zylindermaschinen auf 3 Zylinder bei Zylinderabschaltungen von 8-Zylindermaschinen auf 4 Zylinder oder bei Zylinderabschaltungen von 12-Zylindermaschinen auf 6 Zylinder. Im erstgenannten Fall werden alternativ zu Anregungen der 3. Ordnung die Anregungen der 1,5. Ordnung getilgt, und im mittleren Fall alternativ zu Anregungen der 4. Ordnung die Anregungen der 2. Ordnung, und im letztgenannten Fall alternativ zur 6. Ordnung die 3. Ordnung.

Bei der Ausführung des Tilgersystems gemäß den Fig. 4 und 5 sind die Tilgermassen 7a und 7b zumindest im Wesentlichen auf gleichen Radien um die Zentralachse 15 des Tilgersystems 1 angeordnet, weshalb die Führungsbahnen 13a und 13b mit Umfangsversatz zueinander angeordnet sind.

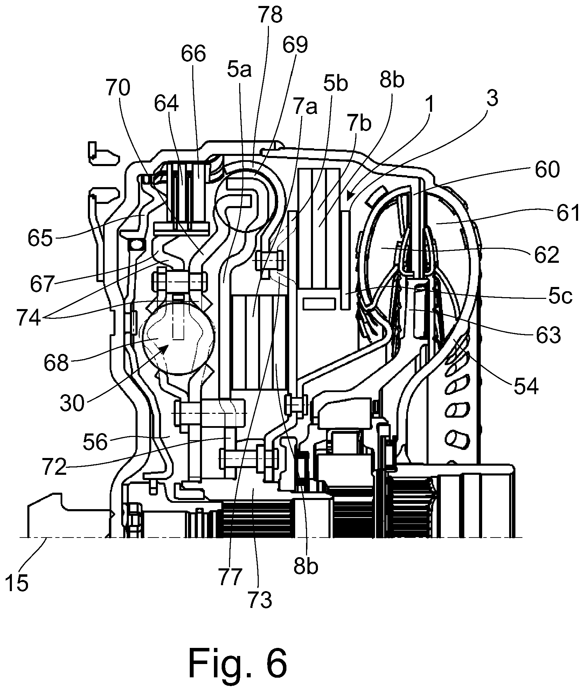

Eine hiervon abweichende Ausführung ist aus Fig. 6 entnehmbar, bei welcher die Tilgermassen 7a und 7b auf deutlich unterschiedlichen Radien um die Zentralachse des Tilgersystems 1 angeordnet sind. Verständlicherweise sind bei einer derartigen Ausführung die Führungsbahnen für die Tilgermassen 7a und die Führungsbahnen für die Tilgermassen 7b im axial mittleren Tilgermassen-Trägerelement 5b mit Radialversatz zueinander angeordnet. Da ansonsten keine Unterschiede gegenüber den bereits in Fig. 5 dargestellten Führungsbahnen 13a, 13b bestehen, wird auf eine zeichnerische Darstellung der Führungsbahnen bei der Ausführung gemäß Fig. 6 verzichtet.

In Fig. 6 ist weiterhin eine Einbausituation für das erfindungsgemäße Tilgersystem 1 dargestellt. Demnach ist das Tilgersystem 1 Teil eines Torsionsschwingungsdämpfers 30, der im Gehäuse 54 einer hydrodynamischen Kopplungsanordnung 56 vorgesehen ist. Diese hydrodynamische Kopplungsanordnung 56 weist einen hydrodynamischen Kreis 60 mit Pumpenrad 61, Turbinenrad 62 und Leitrad 63 auf, sowie eine Kupplungsvorrichtung 64, die über einen Kupplungskolben 65 sowie eine Reibscheibenkupplung 66 verfügt. In Abhängigkeit von der Ansteuerung des Kupplungskolbens 65 ist die Kupplungsvorrichtung 64 zwischen einer Einrückposition und einer Ausrückposition bewegbar. Die Kupplungsvorrichtung 64 ist mit einem Torsionsdämpfereingang 67 einer über zwei Umfangsfedersätze 68, 69 verfügenden Dämpfungseinrichtung 70 verbunden, wobei zwischen den beiden Umfangsfedersätzen 68, 69 ein Torsionsdämpfer-Zwischenbauteil 74 wirksam ist. Der Torsionsdämpferausgang 72 der Dämpfungseinrichtung 70 wirkt mit einem Abtrieb 73 zusammen, und dient darüber hinaus als Tilgermassen-Trägerelement 5a. Das Tilgermassen-Trägerelement 5b ist ebenfalls mit dem Torsionsdämpferausgang 72 der Dämpfungseinrichtung 70 verbunden, und zwar über eine am Tilgermassen-Trägerelement 5b vorgesehene Axialausdrückung 77, mittels der das Tilgermassen-Trägerelement 5b mit einer den radial äußeren Umfangsfedersatz 69 radial außen teilweise umschließenden Führung 78 in Nietverbindung steht. Diese Führung 78 ist drehfest mit dem Torsionsdämpferausgang 72 der Dämpfungseinrichtung 70. Die Dämpfungseinrichtung 70 bildet zusammen mit dem Tilgersystem 1 den Torsionsschwingungsdämpfer 30, wobei die Dämpfungseinrichtung axial benachbart zum Tilgersystem 1 vorgesehen ist.

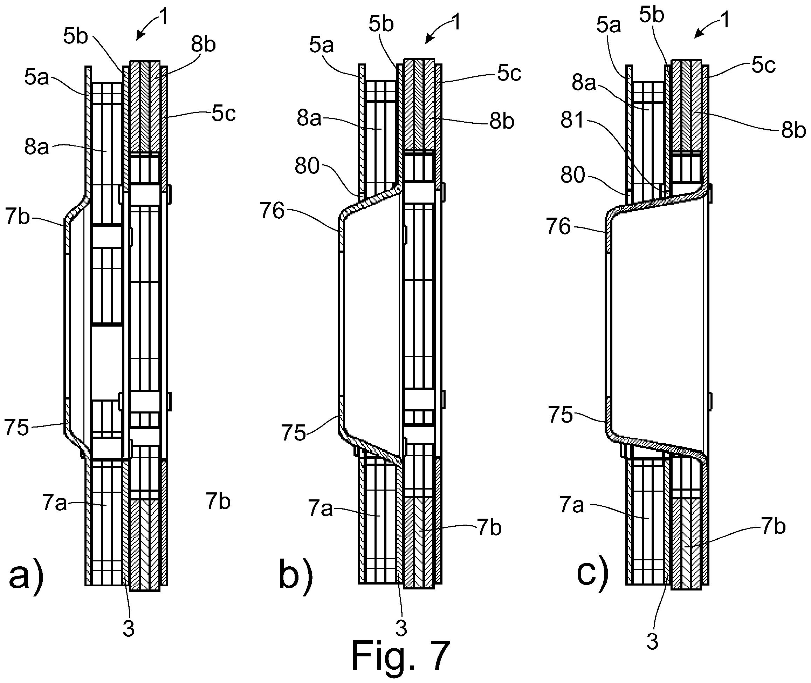

In Fig. 7 ist eine von der in Fig. 6 dargestellten Ausführung abweichende Anbindung 75 an eine Dämpfungseinrichtung eines Torsionsschwingungsdämpfers dargestellt. Gemäß Fig. 7a ist an dem zu einer Dämpfungseinrichtung benachbarten Tilgermassen-Trägerelement 5a im radial inneren Bereich eine Nabe 76 angeformt, welche zur Herstellung einer Verbindung mit einem nicht gezeigten Bauteil der Dämpfungseinrichtung vorgesehen ist. Die Nabe 76 ist hierzu in Richtung zu diesem Bauteil der Dämpfungseinrichtung getellert. Alternativ kann die Nabe 76 aber auch gemäß Fig. 7b an dem axial mittleren Tilgermassen-Trägerelement 5b oder aber gemäß Fig. 7c an dem von der besagten Dämpfungseinrichtung am weitesten entfernten Tilgermassen-Trägerelement 5c ausgebildet sein. In den beiden letztgenannten Fällen ist die Tellerung der Nabe 76 in Achsrichtung deutlich stärker ausgebildet als im erstgenannten Fall. Bei Ausbildung der Nabe 76 am Tilgermassen-Trägerelement 5b durchgreift die Nabe 76 eine radial innere Ausnehmung 80 im Tilgermassen-Trägerelement 5a, während bei Ausbildung der Nabe 76 am Tilgermassen-Trägerelement 5c die Nabe 76 sowohl eine radial innere Ausnehmung 81 im Tilgermassen-Trägerelement 5b als auch die radial innere Ausnehmung 80 im Tilgermassen-Trägerelement 5a durchgreift.

### Bezugszeichen

- 1: Tilgersystem
- 3: Tilgermassenträger
- 5: Tilgermassen-Trägerelemente
- 7: Tilgermassen
- 8: Tilgermasseneinheit
- 11: Abstandsstücke
- 13: Führungsbahnen
- 14: Ausgangsbereich
- 15: Zentralachse
- 17: Anschlussbereiche
- 20: Rollkörper
- 22: Führungsbahn
- 24: Ausgangsbereich
- 25: Anschlussbereich
- 26: Kontaktbereich
- 27: Kontaktbereich
- 28: geometrische Anformung
- 30: Torsionsschwingungsdämpfer
- 31: Anschlag
- 32: ringförmiges Bauteil
- 33: Ringkörper
- 34: Halterung
- 35: Tilgermassenzentrum
- 37: Bereichsmitte
- 38: Anschlagaufnehmer
- 40: Anschlagprofil
- 42: Umfangsseite
- 43: Anschlagseite
- 44: Tilgermassenelemente
- 54: Gehäuse
- 56: Kopplungsanordnung
- 60: hydrodynamischer Kreis
- 61: Pumpenrad
- 62: Turbinenrad
- 63: Leitrad
- 64: Kupplungsvorrichtung
- 65: Kupplungskolben
- 66: Reibscheibenkupplung
- 67: Torsionsdämpfereingang
- 68: Umfangsfedersatz radial innen
- 69: Umfangsfedersatz radial außen
- 70: Dämpfungseinrichtung
- 72: Torsionsdämpferausgang
- 73: Abtrieb
- 74: Torsionsdämpfer-Zwischenbauteil
- 75: Anbindung
- 76: Nabe
- 77: Axialausdrückung
- 78: Führung
- 80: Ausnehmung
- 81: Ausnehmung

## Patentansprüche

1. Tilgersystem (1), aufweisend einen Tilgermassenträger (3) mit einer Mehrzahl axial benachbart zueinander angeordneter Tilgermassen-Trägerelementen (5a bis 5c), die zur Aufnahme von ebenfalls benachbart zueinander angeordneten Tilgermasseneinheiten (8a, 8b) vorgesehen sind, **dadurch gekennzeichnet, dass** wenigstens ein Tilgermassen-Trägerelement (5b) der Tilgermassen-Trägerelemente (5a bis 5c) zur Aufnahme jeweils zweier axial benachbart zueinander angeordneter Tilgermasseneinheiten (8a, 8b) vorgesehen ist, mit gegenüber denjenigen Tilgermassen-Trägerelementen (5a, 5c), welche lediglich jeweils nur zumindest eine Tilgermasseneinheit (8a, 8b) aufnehmen, jeweils der doppelten Anzahl an Führungsbahnen (13a, 13b), nämlich zum einen die Führungsbahnen (13a) für die zumindest eine Tilgermasseneinheit (8a) an einer Seite und zum anderen die Führungsbahnen (13b) für die zumindest eine Tilgermasseneinheit (8b) an der Gegenseite.

2. Tilgersystem nach Anspruch 1, **dadurch gekennzeichnet, dass** jeweils zwei mit Axialabstand zueinander angeordnete Tilgermassen-Trägerelemente (5a und 5b; 5b und 5c) jeweils eine Tilgermasseneinheit (8a, 8b) axial zwischen sich aufnehmen, und zumindest ein axial zwischen jeweils zwei zueinander benachbarten Tilgermasseneinheiten (8a, 8b) angeordnetes Tilgermassen-Trägerelement (5b) zur Aufnahme zweier Tilgermasseneinheiten (8a, 8b) vorgesehen ist.

3. Tilgersystem nach Anspruch 1, **dadurch gekennzeichnet, dass** bei Auslegung der beiden zueinander benachbarten Tilgermasseneinheiten (8a, 8b) auf Anregungen eines Antriebs, wie einer Brennkraftmaschine, mit unterschiedlichen Ordnungen an dem zumindest einen axial zwischen zwei zueinander benachbarten Tilgermasseneinheiten (8a, 8b) angeordneten Tilgermassen-Trägerelement (5b) die Führungsbahnen (13a, 13b) unterschiedlich ausgebildet sein können.

4. Tilgersystem nach Anspruch 1, **dadurch gekennzeichnet, dass** bei Auslegung der beiden zueinander benachbarten Tilgermasseneinheiten (8a, 8b) auf Anregungen eines Antriebs, wie einer Brennkraftmaschine, mit zumindest im Wesentlichen gleichen Ordnungen an dem zumindest einen axial zwischen zwei zueinander benachbarten Tilgermasseneinheiten (8a, 8b) angeordneten Tilgermassen-Trägerelement (5b) die Führungsbahnen (13a, 13b) zumindest im Wesentlichen gleich ausgebildet sind.

5. Tilgersystem nach einem der Ansprüche 3 oder 4, **dadurch gekennzeichnet, dass** bei Anordnung zweier zueinander benachbarter Tilgermasseneinheiten (8a, 8b) zumindest im Wesentlichen auf gleichem Durchmesser um eine Zentralachse (15) an dem zumindest einen axial zwischen den beiden zueinander benachbarten Tilgermasseneinheiten (8a, 8b) angeordneten Tilgermassen-Trägerelement (5b) die Führungsbahnen (13a, 13b) für beide Tilgermasseneinheiten (8a, 8b) mit Umfangsversatz zueinander ausgebildet sind.

6. Tilgersystem nach einem der Ansprüche 3 oder 4, **dadurch gekennzeichnet, dass** bei Anordnung zweier zueinander benachbarter Tilgermasseneinheiten (8a, 8b) auf unterschiedlichen Durchmessern um eine Zentralachse (15) an dem zumindest einen axial zwischen den beiden zueinander benachbarten Tilgermasseneinheiten (8a, 8b) angeordneten Tilgermassen-Trägerelement (5b) die Führungsbahnen (13a, 13b) für beide Tilgermasseneinheiten (8a, 8b) mit Radialversatz zueinander ausgebildet sind.

7. Tilgersystem nach Anspruch 1, bei welchem eines der Tilgermassen-(5a bis 5c) über eine Anbindung (75) an eine Dämpfungseinrichtung (70) eines Torsionsschwingungsdämpfers (30) verfügt, **dadurch gekennzeichnet, dass** die Anbindung (75) eine das Tilgermassen-Trägerelement (5a bis 5c) radial innen weiterbildende Nabe (76) umfasst.

8. Tilgersystem nach Anspruch 7, bei welchem die Nabe (62) zumindest im Wesentlichen axial benachbart zur Dämpfungseinrichtung (70) des Torsionsschwingungsdämpfers (30) ist, **dadurch gekennzeichnet, dass** die Nabe (76) über eine Erstreckungskomponente in Richtung zur Dämpfungseinrichtung (70) verfügt.

9. Tilgersystem nach einem der Ansprüche 7 oder 8, **dadurch gekennzeichnet, dass** die Nabe (76) bei Ausbildung an einem Tilgermassen-Trägerelement (5b, 5c), das an der von der Dämpfungseinrichtung (70) abgewandten Seite des zu dieser Dämpfungseinrichtung (70) benachbarten Tilgermassen-Trägerelementes (5a) vorgesehen ist, zumindest das zum Torsionsschwingungsdämpfer (30) benachbarte Tilgermassen-Trägerelement (5a; 5a und 5b) radial innen in Achsrichtung durchgreift.

10. Tilgersystem nach Anspruch 7, **dadurch gekennzeichnet, dass** die Dämpfungseinrichtung (70) des Torsionsschwingungsdämpfers (30) zur Aufnahme der Anbindung (75) eines der Tilgermassen-Trägerelemente (5a bis 5c) über einen Torionsdämpferausgang (72) verfügt.

## Claims

1. Absorber system (1), having an absorber mass carrier (3) with a plurality of absorber mass carrier elements (5a to 5c) which are arranged axially adjacently with respect to one another and are provided to receive absorber mass units (8a, 8b) which are likewise arranged adjacently with respect to one another, **characterized in that** at least one absorber mass carrier element (5b) of the absorber mass carrier elements (5a to 5c) is provided to receive in each case two absorber mass units (8a, 8b) which are arranged axially adjacently with respect to one another, with in each case twice the number of guide tracks (13a, 13b) in comparison with those absorber mass carrier elements (5a, 5c) which receive merely in each case only at least one absorber mass unit (8a, 8b), namely firstly the guide tracks (13a) for the at least one absorber mass unit (8a) on one side and secondly the guide tracks (13b) for the at least one absorber mass unit (8b) on the opposite side.

2. Absorber system according to Claim 1, **characterized in that** in each case two absorber mass carrier elements (5a and 5b; 5b and 5c) which are arranged at an axial spacing from one another receive in each case one absorber mass unit (8a, 8b) axially between them, and at least one absorber mass carrier element (5b) which is arranged axially between in each case two absorber mass units (8a, 8b) which are adjacent with respect to one another is provided to receive two absorber mass units (8a, 8b).

3. Absorber system according to Claim 1, **characterized in that** the guide tracks (13a, 13b) can be of different configuration on the at least one absorber mass carrier element (5b) which is arranged axially between two absorber mass units (8a, 8b) which are adjacent with respect to one another in the case of the adaptation of the two absorber mass units (8a, 8b) which are adjacent with respect to one another to excitations of a drive, such as an internal combustion engine, with different orders.

4. Absorber system according to Claim 1, **characterized in that** the guide tracks (13a, 13b) can be of at least substantially identical configuration on the at least one absorber mass carrier element (5b) which is arranged axially between two absorber mass units (8a, 8b) which are adjacent with respect to one another in the case of the adaptation of the two absorber mass units (8a, 8b) which are adjacent with respect to one another to excitations of a drive, such as an internal combustion engine, with at least substantially identical orders.

5. Absorber system according to either of Claims 3 and 4, **characterized in that**, in the case of the arrangement of two absorber mass units (8a, 8b), which are adjacent with respect to one another, at least substantially on an identical diameter about a central axis (15) on the at least one absorber mass carrier element (5b) which is arranged axially between the two absorber mass units (8a, 8b) which are adjacent with respect to one another, the guide tracks (13a, 13b) for both absorber mass units (8a, 8b) are configured with a circumferential offset with respect to one another.

6. Absorber system according to either of Claims 3 and 4, **characterized in that**, in the case of an arrangement of two absorber mass units (8a, 8b), which are adjacent with respect to one another, on different diameters about a central axis (15) on the at least one absorber mass carrier element (5b) which is arranged axially between the two absorber mass units (8a, 8b) which are adjacent with respect to one another, the guide tracks (13a, 13b) for both absorber mass units (8a, 8b) are configured with a radial offset with respect to one another.

7. Absorber system according to Claim 1, in which one of the absorber mass carrier elements (5a to 5c) has an attachment (75) to a damping device (70) of a torsional vibration damper (30), **characterized in that** the attachment (75) comprises a hub (76) which extends the absorber mass carrier element (5a to 5c) radially to the inside.

8. Absorber system according to Claim 7, in which the hub (62) is at least substantially axially adjacent with respect to the damping device (70) of the torsional vibration damper (30), **characterized in that** the hub (76) has an extent component in the direction of the damping device (70).

9. Absorber system according to either of Claims 7 and 8, **characterized in that**, in the case of a configuration on an absorber mass carrier element (5b, 5c) which is provided on the side, facing away from the damping device (70), of the absorber mass carrier element (5a) which is adjacent with respect to the said damping device (70), the hub (76) reaches in the axial direction radially to the inside through the at least one absorber mass carrier element (5a; 5a and 5b) which is adjacent with respect to the torsional vibration damper (30).

10. Absorber system according to Claim 7, **characterized in that** the damping device (70) of the torsional vibration damper (30) has a torsional damper outlet (72) for receiving the attachment (75) of one of the absorber mass carrier elements (5a to 5c).

## Revendications

1. Système d'amortissement (1), présentant un support de masselotte (3) avec une pluralité d'éléments de support de masselotte (5a à 5c) disposés de manière adjacente axialement les uns aux autres, qui sont prévus pour recevoir des unités de masselotte (8a, 8b) également disposées de manière adjacente les unes aux autres, **caractérisé en ce qu'**au moins un élément de support de masselotte (5b) des éléments de support de masselotte (5a à 5c) est prévu pour recevoir à chaque fois deux unités de masselotte (8a, 8b) disposées de manière adjacente l'une à l'autre, avec, par rapport aux éléments de support de masselotte (5a, 5c) qui ne reçoivent à chaque fois qu'au moins une unité de masselotte (8a, 8b), dans chaque cas le double du nombre de pistes de guidage (13a, 13b), à savoir d'une part les pistes de guidage (13a) pour l'au moins une unité de masselotte (8a) d'un côté et d'autre part les pistes de guidage (13b) pour l'au moins une unité de masselotte (8b) du côté opposé.

2. Système d'amortissement selon la revendication 1, **caractérisé en ce qu'**à chaque fois deux éléments de support de masselotte disposés à distance axiale l'un de l'autre (5a et 5b ; 5b et 5c) reçoivent axialement entre eux à chaque fois une unité de masselotte (8a, 8b) et au moins un élément de support de masselotte (5b) disposé axialement entre deux unités de masselotte (8a, 8b) à chaque fois adjacentes l'une à l'autre est prévu pour recevoir deux unités de masselotte (8a, 8b) .

3. Système d'amortissement selon la revendication 1, **caractérisé en ce que** lors de la conception des deux unités de masselotte adjacentes l'une à l'autre (8a, 8b) en réponse à des excitations d'un entraînement, tel qu'un moteur à combustion interne, ayant des ordres différents, au niveau de l'au moins un élément de support de masselotte (5b) disposé axialement entre deux unités de masselotte adjacentes l'une à l'autre (8a, 8b), les pistes de guidage (13a, 13b) peuvent être réalisées différemment.

4. Système d'amortissement selon la revendication 1, **caractérisé en ce que** lors de la conception des deux unités de masselotte adjacentes l'une à l'autre (8a, 8b) en réponse à des excitations d'un entraînement, tel qu'un moteur à combustion interne, ayant des ordres au moins essentiellement identiques, au niveau de l'au moins un élément de support de masselotte (5b) disposé axialement entre deux unités de masselotte adjacentes l'une à l'autre (8a, 8b), les pistes de guidage (13a, 13b) sont réalisées de manière au moins essentiellement identique.

5. Système d'amortissement selon l'une quelconque des revendications 3 ou 4, **caractérisé en ce que** lors de l'agencement de deux unités de masselotte adjacentes l'une à l'autre (8a, 8b) au moins essentiellement sur le même diamètre autour d'un axe central (15) au niveau de l'au moins un élément de support de masselotte (5b) disposé axialement entre les deux unités de masselotte adjacentes l'une à l'autre (8a, 8b), les pistes de guidage (13a, 13b) pour les deux unités de masselotte (8a, 8b) sont réalisées avec un décalage périphérique l'une par rapport à l'autre.

6. Système d'amortissement selon l'une quelconque des revendications 3 ou 4, **caractérisé en ce que** lors de l'agencement de deux unités de masselotte adjacentes l'une à l'autre (8a, 8b) sur des diamètres différents autour d'un axe central (15) au niveau de l'au moins un élément de support de masselotte (5b) disposé axialement entre les deux unités de masselotte adjacentes l'une à l'autre (8a, 8b), les pistes de guidage (13a, 13b) pour les deux unités de masselotte (8a, 8b) sont réalisées avec un décalage radial l'une par rapport à l'autre.

7. Système d'amortissement selon la revendication 1, dans lequel l'un des éléments de support de masselotte (5a à 5c) dispose d'une liaison (75) à un dispositif d'amortissement (70) d'un amortisseur d'oscillations de torsion (30), **caractérisé en ce que** la liaison (75) présente un moyeu (76) prolongeant radialement à l'intérieur l'élément de support de masselotte (5a à 5c).

8. Système d'amortissement selon la revendication 7, dans lequel le moyeu (62) est au moins essentiellement axialement adjacent au dispositif d'amortissement (70) de l'amortisseur d'oscillations de torsion (30), **caractérisé en ce que** le moyeu (76) dispose d'une composante s'étendant dans la direction du dispositif d'amortissement (70).

9. Système d'amortissement selon l'une quelconque des revendications 7 ou 8, **caractérisé en ce que** le moyeu (76), lors de la réalisation sur un élément de support de masselotte (5b, 5c) qui est prévu du côté opposé au dispositif d'amortissement (70) de l'élément de support de masselotte (5a) adjacent à ce dispositif d'amortissement (70), vient en prise radialement à l'intérieur dans la direction axiale à travers au moins l'élément de support de masselotte (5a ; 5a et 5b) adjacent à l'amortisseur d'oscillations de torsion (30).

10. Système d'amortissement selon la revendication 7, **caractérisé en ce que** le dispositif d'amortissement (70) de l'amortisseur d'oscillations de torsion (30), pour recevoir la liaison (75) de l'un des éléments de support de masselotte (5a à 5c), dispose d'une sortie d'amortisseur de torsion (72).
